# EUROPEAN PATENT APPLICATION

(11) **EP 1 705 362 A2**
(43) Date of publication of application: **27.09.2006**
(21) Application number: 05107919.2
(22) Date of filing: 30.08.2005
(51) Int. Cl.: F02M 27/04

(54) **Fuel Reformer**

(30) Priority: 22.03.2005 JP 2005081637
(71) Applicant: Maruchi, Hachiro, Midori-ku Nagoya-shi Aichi 458-0801 (JP)
(72) Inventor: Maruchi, Hachiro, Midori-ku Nagoya-shi Aichi 458-0801 (JP)
(74) Representative: Träskman, Berndt Hilding

(57) **Abstract**

Aiming at achieving a fully improved effect of combustion efficiency and being durable for long-term use, a fuel reformer 1 of the present invention, typically disposed on a fuel supply path from a fuel tank of a vehicle to an engine, is configured so that a petroleum-derived liquid fuel reserved in the fuel tank of the vehicle is introduced through the fuel supply path and through an introduction port 52 into a cylindrical container 4, and and allowing it to modify with the aid of the first fuel-reforming grains 2, the second fuel-reforming grains 3 and permanent magnet 71. The engine supplied with thus-modified liquid fuel through the discharge port 53 raises effects of improving the combustion efficiency, improving the fuel cost, and reducing the emission gas.

## Description

### RELATED APPLICATION

This application claims the priority of Japanese Patent Application No. 2005-081637 filed on March 22, 2005.

### FIELD OF THE INVENTION

This invention relates to a fuel reformer reforming a petroleum-derived liquid fuel.

### BACKGROUND ART

Petroleum-base liquid fuels (gasoline, diesel oil, kerosene, etc.) are most important energy sources in today's society. They are becoming more causative of the global warming and environmental pollution therefore of larger impact on the environment of human life, because they generate carbon monoxide (CO), hydrocarbons (HC) and nitrogen oxides (NOx) when they are combusted. However, no promising substitutive energy can be found at present, so that the situation forces to tentatively use the petroleum-base liquid fuels, and this raises an eager demand on a technology which makes it possible to more effectively use them.
[Patent Document 1] Japanese Laid-Open Patent Publication "Tokkaihei" No. 11-12022

Proposals are therefore made on techniques of reforming the spetroleum-base liquid fuels using ceramics and so forth, to thereby improve combustion efficiency, reduce emission gases, improve fuel costs and to increase horse power. (e.g. Patent document 1) Effects of improving the combustion efficiency by these techniques are however still insufficient, and a problem also raises in that clogging may occur during use over a long duration of time.

### SUMMARY OF THE INVENTION

The present invention was conceived after considering the above-described problems, and an object thereof is to provide a fuel reformer capable of achieving a sufficient effect of improving the combustion efficiency, and durable for long-term use.

According to the present invention aimed at solving the above-described problems, there is provided a fuel reformer reforming a petroleum-derived liquid fuel, comprising:
a cylindrical container allowing the liquid fuel to flow therethrough; and
first fuel-reforming grains housed in the cylindrical container, having on the surficial layer thereof a rare earth ceramic layer containing either one of, or both of Ti and Ag, together with a rare earth ore.

The present inventors found out that the petroleum-base liquid fuels could be reformed by bringing them into contact with the fuel-reforming grains (first fuel-reforming grains) having on the surficial layer thereof the rare earth ceramic layer, and that combustion efficiency of vehicle engines and so forth could be improved. The petroleum-derived liquid fuels contain micro-nodules formed typically by entanglement of chain-like hydrocarbons, and it is considered that such nodules are causative of incomplete combustion due to their low ignition properties. The present invention is supposed to improve the combustion efficiency by bringing the liquid fuels into contact with the rare earth ceramic layer so as to decompose the nodules. Although factors contributable to the decomposition of the nodules still remain unclear, the possible causes are ascribable to action of a trace amount of radial rays emitted from the rare earth ceramic layer, actions of the resultant minus ions, and catalytic actions of Ti and Ag. It is also supposed that an abrasive contact between micro-irregularity of the porous surface of the rare earth ceramic layer and the liquid fuels would make some contribution.

The rare earth ceramic layer herein may be comprised of a deposited mixture of rare earth one powder with both of Ti powder and Ag powder or with either one of the two. The rare earth ceramic layer thus-formed by deposition of the mixed powder can raise concentration of the rare earth ore and Ti and/or Ag in the surficial layer, as compared with that of a sintered material admixed typically with a binder, and is therefore successful in obtaining a fully improved fuel reforming effect as described in the above. The rare earth ceramic layer may also be formed on the inner wall surface of the cylindrical container. The fuel reforming effect can thus be obtained synergistically both from the first fuel-reforming grains and from the inner wall of the cylindrical container, thereby the fuel reforming effect is doubled.

Next, the fuel reformer of the this invention may further comprise a magnet housed in the cylindrical container. Under a magnetic field produced by the magnet in the cylindrical container, the nodules separated (micronized) by the first fuel-reforming grains based on their fuel reforming effect can be magnetized, and can be supplied as being kept micronized to engines and so forth, and this is supposed to improve the combustion efficiency. This effect can fully be obtained by configuring the a magnet unit which comprises a perforated diaphragm having through-holes for the liquid fuel formed therein, partitioning the inner space of the cylindrical container into upstream one and downstream one in the direction of flow; and the magnet supported on the perforated diaphragm.

Next, the fuel reformer of this invention may be configured so that second fuel-reforming grains, containing either one of, or both of quartz and garnet, are housed in the cylindrical container together with the first fuel-reforming grains. Quartz and garnet have properties of emitting a large amount of far infrared radiation, and are therefore supposed to have effects of activating the liquid fuel, and preventing foul from adhering on the first fuel-reforming grains and so forth in the cylindrical container. The second fuel-reforming grains may also contain tourmaline. Also tourmaline has a property of emitting far infrared radiation, and is therefore supposed to yield the above-described effect.

Next, the fuel reformer of this invention may be configured as further comprising a perforated diaphragm having through-holes for the liquid fuel formed therein, the perforated diaphragm partitioning the inner space of the cylindrical container into upstream one and downstream one in the direction of flow, each partitioned space serving as a housing compartment for the fuel-reforming grains, and the housing compartments lying in a row in the direction of flow. The housing compartments for the fuel-reforming grains thus disposed in a multiplied manner in the direction of flow of the liquid fuel makes it possible to obtain the above-described effect to a satisfactory degree.

The through-hole formed in the perforated diaphragm may be arranged at a position off-aligned with a position corresponded to the through-hole formed in the adjacent perforated diaphragm. Because the off-alignment of the through-holes of the perforated diaphragms can elongate the length of flow path of liquid fuel in the cylindrical container, and can generate an irregular flow of the liquid fuel, it is made possible to elongate the duration of time of contact between the liquid fuel and the fuel-reforming grains, from which a sufficient fuel-reforming effect is expectable. In particular, such effect can fully be obtained by arranging the through-holes, respectively formed in the perforated diaphragms disposed in a row in the direction of flow, so as to fall on a helical locus centered round the axial line of the direction of flow.

### BRIEF DESCRIPTION OF THE DRAWINGS

FIG. 1 is a drawing showing a sectional structure of the whole portion of a fuel reformer of this invention;
FIG. 2 is an enlarged view showing the introduction port side of FIG. 1;
FIG. 3 is an enlarged view showing the discharge port side of FIG. 1;
FIG. 4 is a drawing showing a first perforated diaphragm;
FIG. 5 is a drawing showing a second perforated diaphragm;
FIG. 6 is a drawing showing a third perforated diaphragm;
FIG. 7A is a drawing showing a holding surface of a fourth perforated diaphragm;
FIG. 7B is a drawing showing a surface opposite to the holding surface of a fourth perforated diaphragm;
FIG. 8 is a drawing showing a magnet unit;
FIG. 9 is a drawing showing a plate composing the end portion of a container;
FIG. 10 is a drawing showing a spacer;
FIG. 11 is a drawing showing a sectional structure of a first fuel-reforming grain;
FIG. 12 is a first explanatory drawing related to housing into the container;
FIG. 13 is a second explanatory drawing related to housing into the container;
FIG. 14 is a drawing showing a modified example of the perforated diaphragm;
FIG. 15 is a drawing showing housing into the container using the perforated diaphragm shown in FIG. 14; and
FIG. 16 is a drawing showing process steps of manufacture of the first fuel-reforming grain.

### BEST MODES FOR CARRYING OUT THE INVENTION

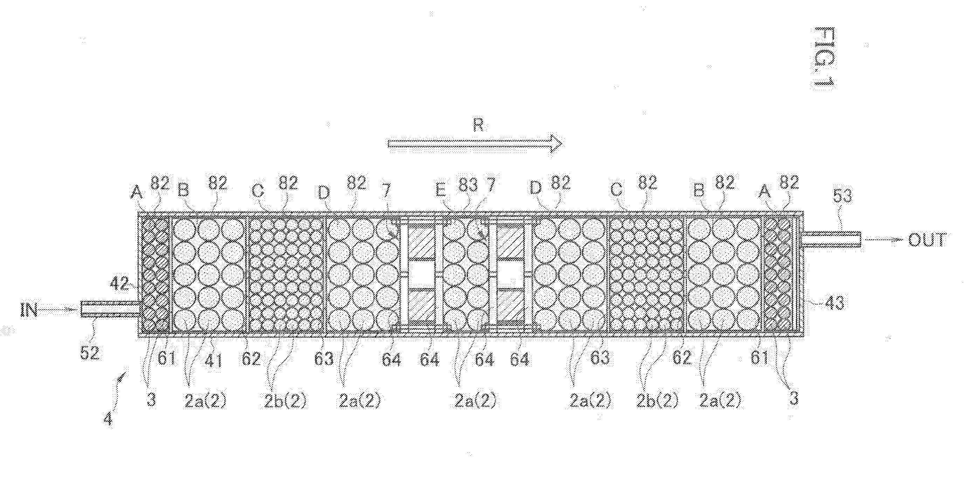

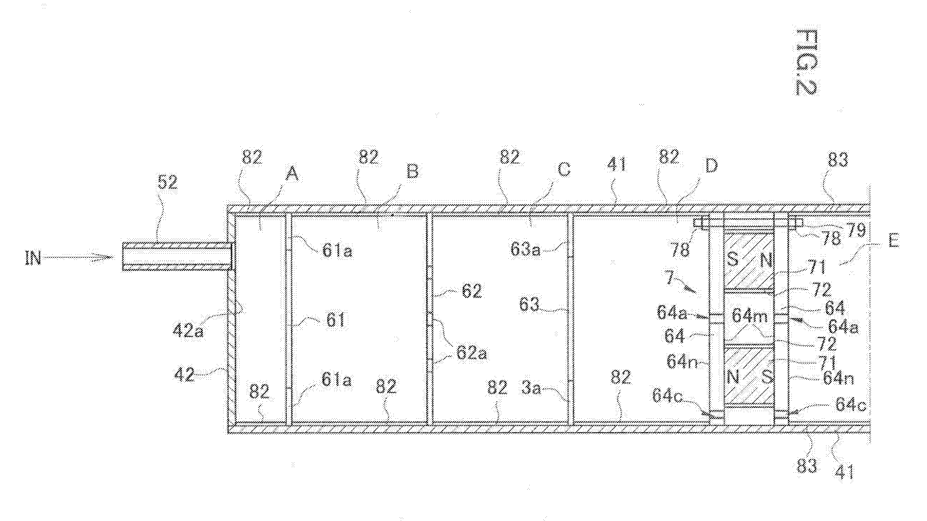

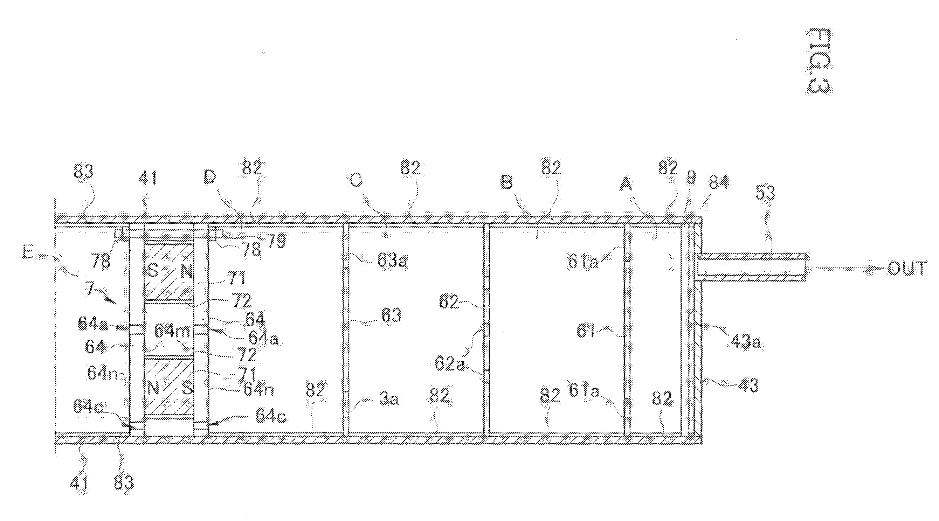

The following paragraphs will describe embodiments of this invention, referring to the attached drawings. FIG. 1 shows a sectional structure of the whole portion of a fuel reformer 1. FIG. 2 shows an enlarged sectional structure on the introduction port 52 side, and FIG. 3 shows an enlarged sectional structure on the discharge port 53 side. FIG. 2 and FIG. 3 omit illustration of fuel-reforming grains 2, 3 for the convenience of explanation. In the fuel reformer 1, housing compartments B to D provided inside a cylindrical container 4 have a first fuel-reforming grains 2 mainly composed of a rare earth ore housed therein, and a housing compartment "A" has a second fuel-reforming grains 3, mainly composed of quartz and garnet, housed therein. There is also disposed a magnet unit 7 having a permanent magnet 71 incorporated therein. The fuel reformer 1 is provided typically as being inserted on a fuel supply path ranging from a fuel tank to an engine of a vehicle, allowing a petroleum-derived liquid fuel (in particular diesel oil, simply referred to as liquid fuel, hereinafter) reserved in the fuel tank of the vehicle to flow through the fuel supply path and through an introduction port 52 into the cylindrical container 4, and allowing it to modify with the aid of the first fuel-reforming grains 2, the second fuel-reforming grains 3 and permanent magnet 71. The engine supplied with thus-modified liquid fuel through the discharge port 53 raises effects of improving the combustion efficiency, improving the fuel cost, and reducing the emission gas.

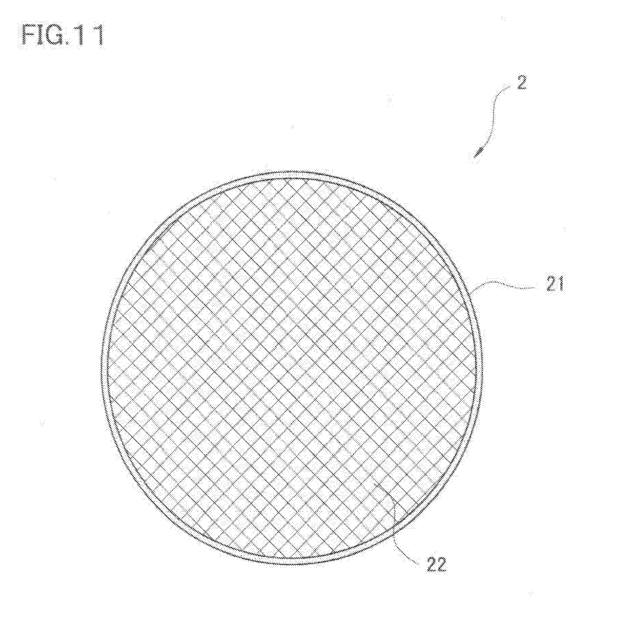

The first fuel-reforming grain 2 comprises, as shown in the sectional view in FIG. 11, a ceramic grain 22 obtained by molding and sintering a mixture containing rare earth ore powder and a binder (pot earth, etc.), and a rare earth ceramic layer 21 formed on the surface thereof. The rare earth ore is a naturally occurred one, containing silicon dioxide (SiO₂) and alumina (Al₂O₃) as major components of the ore, as well as 3% or more, for example, of oxides of rare earth elements (e.g., oxides of Y, La and Ce), and trace amounts of radioactive elements such as uranium (U) and thorium (Th). These components are said to emit minus ions and far infrared radiation.

The rare earth ceramic layer 21 comprises a mixed powder of rare earth ore powder and Ti and Ag powders deposited on the surface of the ceramic grains 22. The mixed powder may be composed of rare earth ore powder, typically mixed with approximately 0.5 to 5wt% of Ti powder, and approximately 0.1 to 3wt% of Ag powder. The Ti powder and Ag powder may typically be a pure Ti powder and a pure Ag powder (e.g., with a purity of 99% or above). Formation of the rare earth ceramic layer 21 by allowing the mixed powder to deposit on the surface of the ceramic grains 22 as shown in FIG. 11 makes it possible to increase concentration of the rare earth ore (and concentration of Ti and Ag) in the surficial layer of the first fuel-reforming grains 2, as compared with the binder-containing ceramic grain 22 alone. This means that a sufficient level of fuel-reforming effect as described in the above can be obtained.

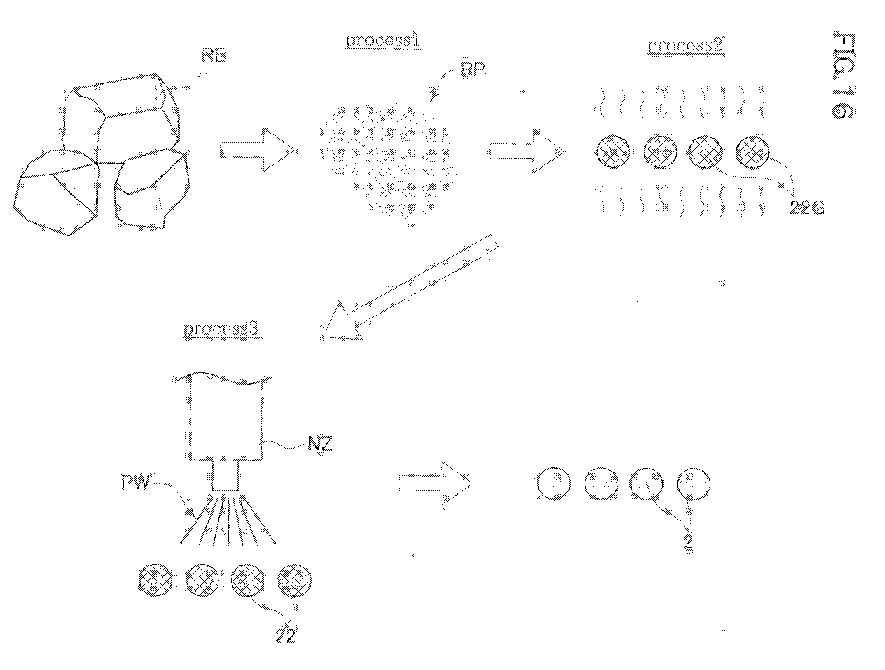

FIG. 16 shows process steps of manufacture of the first fuel-reforming grains 2. In process step 1, a rare earth ore RE as a major component of the rare earth ceramic layer 21 and the ceramic grain 22 is crushed to obtain a powder RP. Next, the powder RP of the rare earth ore RE is mixed with pot earth and so forth, molded to obtain green ceramic grains 22G with a spherical shape, sintered at a temperature around 1,200 to 1,400°C, to thereby obtain the ceramic grains 22 (process step 2). Next, a mixed power PW is allowed to deposit on the ceramic grains 22 (process step 3). The mixed powder PW comprises the powder RP of the rare earth ore RE, and Ti powder and Ag powder mixed therewith. Deposition of the mixed powder can be realized using a spraying device spraying the mixed powder PW together with a highly-compressed gas produced by a compressor (not shown), from a spraying nozzle NZ. When the mixed powder PW is sprayed over the ceramic grains 22 typically at a speed of spraying of 80 m/sec or more and a pressure of spraying of 3 kg/cm², the collision of the mixed powder PW raises the surface temperature of the ceramic grains 22 to as high as the melting point (1,800°C or around) thereof, and the mixed powder is deposited on the melted surface to thereby form the rare earth ceramic layer 21. The deposition is carried out in a nitrogen atmosphere in order to avoid excessive oxidation of the mixed powder PW.

The second fuel-reforming grains 3 are obtained by molding and sintering a mixture containing quartz powder, garnet powder, tourmaline powder, a binder (pot earth, etc.) and so forth. Quartz is a crystalline silicon dioxide (SiO₂), for which rock crystal is available. Garnet is a kind of silicate ores. Tourmaline is also a kind of silicate ore, has a piezoelectric effect and pyroelectric effect, so that it generates electric charge when applied with external pressure or temperature changes. These ores are said to emit far infrared radiation. The second fuel-reforming grains 3 are sintered at around 1,200 to 1,400°C.

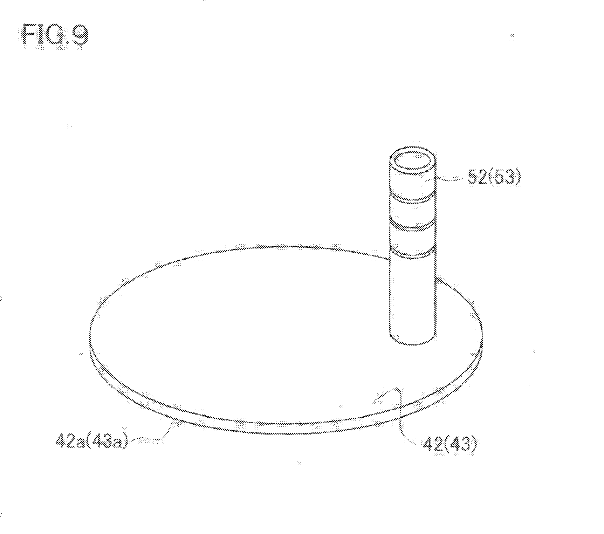

The cylindrical container 4 comprises a cylinder component 41 and end wall plates 42, 43 disposed at the end portions on the upstream and downstream sides. The end wall plates 42, 43 have an introduction port 52 and a discharge port 53 (FIG. 9), respectively, and the direction from the introduction port 52 to the discharge port 53 is referred to as the direction of flow R of the liquid fuel in the cylindrical container 4. The cylindrical container 4 and internal components (61 to 64, 81 to 83, etc.), described later, are composed of a non-magnetic stainless steel, such as SUS301 (austenitic stainless steel). Joint portions Y of the cylinder component 41 and the end wall plates 42, 43 are formed by argon arc welding. The inner wall surface of the cylindrical container 4 and the surface of the internal components have, formed thereon, a rare earth ceramic layer which is similar to the rare earth ceramic layer 21 provided to the surficial portion of the first fuel-reforming grains 2, also by which the fuel-reforming effect is obtained. The rare earth ceramic layer can be formed using the above-described deposition process (spraying device). More specifically, when the above-described mixed powder is sprayed together with a highly-compressed gas, the surface temperature of the cylindrical container 4 made of a stainless steel rises to as high as its melting point (1,680°C or around) due to collision of the mixed powder, and the mixed powder is allowed to deposit on the melted surface, to thereby form the rare earth ceramic layer. The collision of the mixed powder also results in work hardening of the (austenitic) stainless steel, and this is successful in obtaining the cylindrical container 4 of a high strength.

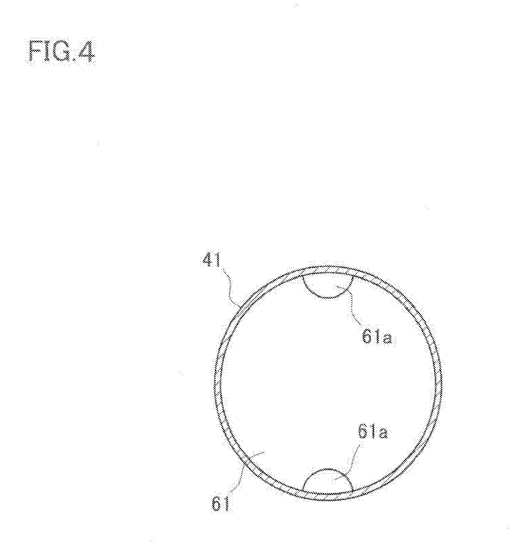

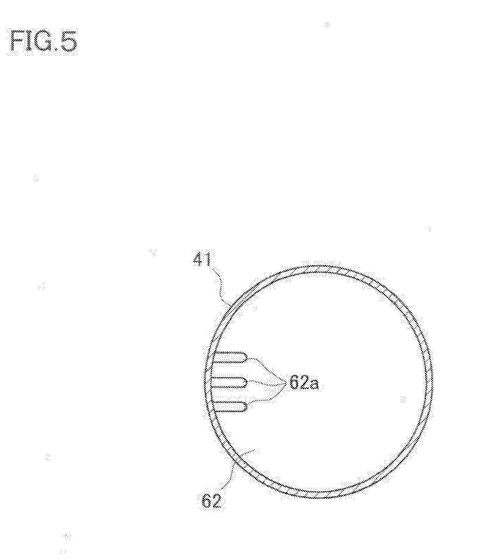

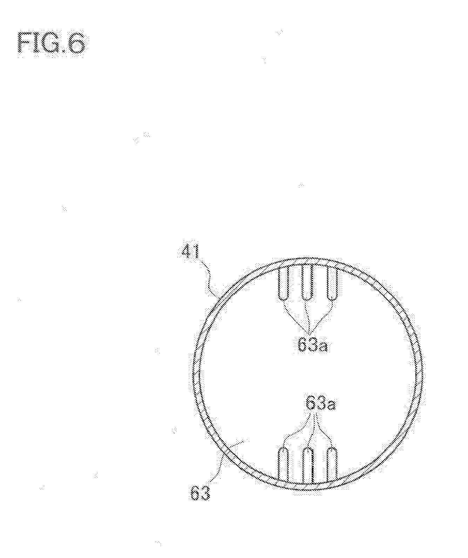

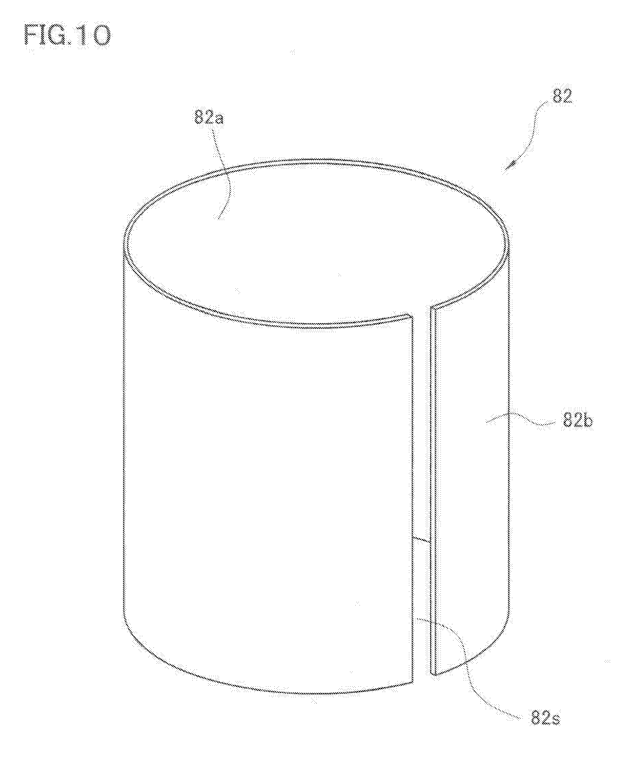

Inside the cylindrical container 4, there are provided perforated diaphragms (simply referred to as diaphragm, hereinafter) 61 to 64, having through-holes 61 a to 64a for the liquid fuel formed therein, so as to partition the inner space of the container, as shown in FIGs. 4 to 7B. Between each of the end wall plates 42, 43 and the diaphragm 61, and between every adjacent diaphragms 62 to 64, there are provided cylindrical spacers (collar) 81 to 83 positioning these members (FIG. 10). Referring now to the spacer 82 shown in FIG. 10 for example, the spacer 82 has a cylindrical form with a diameter almost equal to the inner diameter of the cylinder component 41 of the cylindrical container 4, and has a slit 82s, facilitating engagement thereof with the cylinder component 41, formed in the direction of axial line thereof. The spacer 82 inserted into the cylinder component 41 so as to engage therewith contacts on the outer surface 82b thereof with the inner wall of the cylinder component 41, and so as to respectively face to the rim portions of the diaphragms 61 to 64. The spacer 82 also immobilizes the diaphragms so that the edge portions 82c, 82d thereof are abutted with the rim portions of the main surfaces of the diaphragms 61 to 64. As described in the above, the inner space of the cylindrical container 4 is partitioned by the diaphragms 61 to 64 and the spacers 81 O 83 into a plurality of housing compartments A to E lying in a row in the direction of flow R of the liquid fuel, and each of the housing compartments A to E has the first fuel-reforming grains 2 (2a, 2b) and second fuel-reforming grains 3 housed therein.

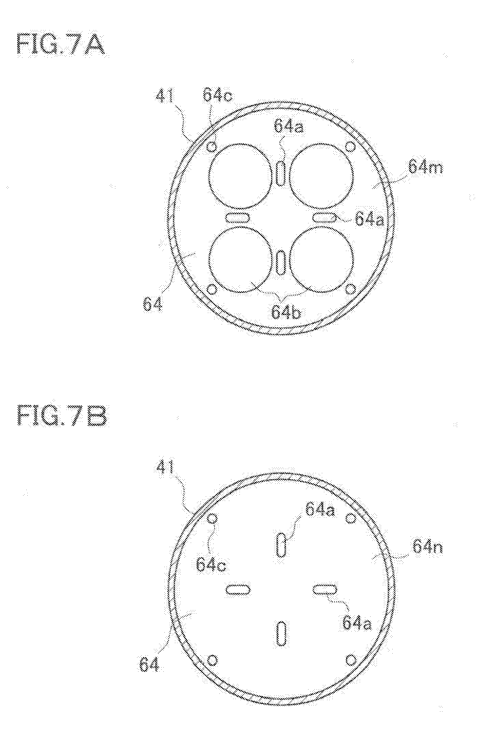

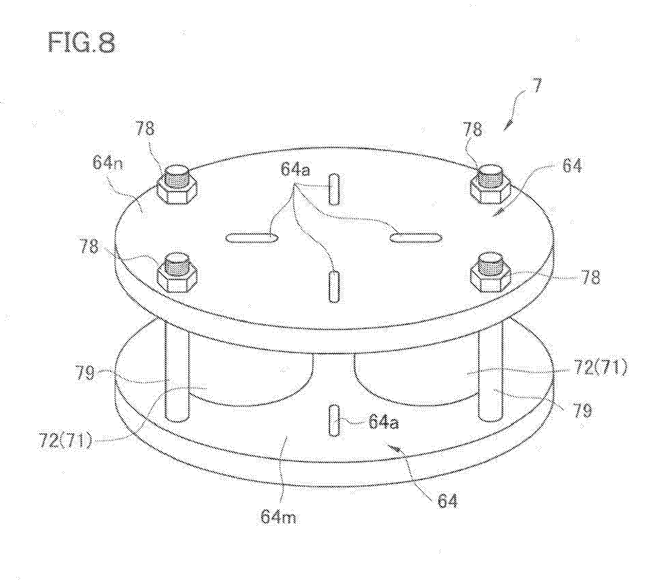

Inside the cylindrical container 4, there is provided a magnet unit 7 as is shown in Fig.8, having a permanent magnet 71 held between a pair of diaphragms 64. The permanent magnet 71 is composed of an Nd-Fe-B-base sintered magnet, and is covered with a metal jacket 72 (made of SUS301). One main surface 64m of the diaphragm 64 has, formed therein, a recess 64b with which the permanent magnet 71 is engaged (FIG. 7A), and two diaphragms 64 hold the permanent magnet 71 in between, while opposing the main surfaces 64m thereof, and making the individual end portions of the permanent magnet 71 engage with the respective recesses 64b. The diaphragms 64 have screw holes 64c bored therein (FIGs. 7A, 7B), so that two diaphragms 64 are fixed using bolts 79 and nuts 78. The magnet unit 7 has a plurality of permanent magnets 71 which are arranged so as to alternate the polarity of both ends of every adjacent permanent magnets 71. Two magnet units 7 are arranged in the cylindrical container, and a space therebetween serves as a hausing compartment E. Effects expected from setting of the magnet units 7 in the cylindrical container 4 are as described in the above.

Through-holes 61a to 63a for the liquid fuel, formed in the diaphragms 61 to 63, are configured by notches formed at the peripheral portions of the diaphragms 61 to 63, as shown in FIGs . 4 to 6. The diaphragms 61 to 63 are arranged according to orientations shown in FIGs. 4 to 6. Bringing now the diaphragm 62 into focus, through-holes 62a are arranged at positions 90° rotated from the positions corresponded to through-holes 61a, 63a formed in the adjacent diaphragms 61, 63. The off-alignment of the through-holes 61a to 63a, as described in the above, can elongate the length of flow path of liquid fuel in the cylindrical container 4, so that it is made possible to elongate the duration of time of contact between the liquid fuel and the fuel-reforming grains 2, 3.

Thus-configured housing compartments A to E are arranged symmetrically about the housing compartment E disposed between two magnet units 7, on the upstream and downstream sides (on the left-hand and right-hand sides in the drawing), and the housing compartment "A" houses the second fuel-reforming grains 3, and the housing compartments B to E house the first fuel-reforming grains 2 (2a, 2b). In particular, the housing compartment A on the introduction port 52 side is designed to house the second fuel-reforming grains 3, because this configuration makes it possible to allow the second fuel-reforming grains 3 to initially contact with the liquid fuel introduced through the introduction port 52, to thereby avoid adhesion of foul onto the first fuel-reforming grains 2 (2a, 2b) in the housing compartments B to E. The housing compartment "A" on the discharge port 53 side is designed to house the second fuel-reforming grains 3, in order to prevent foul adhesion typically on to the engine, a destination of flow of the liquid fuel.

The first fuel-reforming grains 2 are classified into the first fuel-reforming grains 2b having small diameters (6 to 10 mm or around: first size) and the first fuel-reforming grains 2a having large diameters (10 to 14 mm or around: second size), wherein the first fuel-reforming grains 2b of small diameters are housed in the housing compartment C, and the first fuel-reforming grains 2b of large diameters are housed in the housing compartments B, D and E. The first fuel-reforming grains 2b of small diameters preferably have sizes of 70 to 80% of those of the first fuel-reforming grains 2a of large diameters. The reason why the first fuel-reforming grains 2a, 2b are housed by size into the housing compartments B to E is as follows. The first fuel-reforming grains 2b having smaller diameters can give a thorough fuel-reforming effect by virtue of their large total surface area which can contact with the liquid fuel, but have only a small gap allowing the liquid fuel to flow therethrough, and this may increase the flow resistance, and may burden heavily on the engine or the like. Combined use of the first fuel-reforming grains 2b of small diameters and the first fuel-reforming grains 2a of large diameters is, therefore, successful in achieving a thorough fuel-reforming effect while keeping the flow resistance of the liquid fuel lowered at an appropriate level.

For the purpose of keeping an appropriate level of flow resistance of the liquid fuel, it is preferable, as shown in FIG.1, that the fuel reformer has three or more successive housing compartments having the first fuel-reforming grains 2a of large diameters housed therein (housing compartments D-->E-->D). As shown in Fig.1, it is also preferable, in view of keeping the flow resistance of the liquid fuel at an appropriate level, to dispose the housing compartments B and D , which have the second fluel-reforming grains 2a of large diameters, causing smaller flow resistance, on the upstream and downstream sides, in the direction of flow R, of the housing compartment C having the first fuel-reforming grains 2b of small diameters, causing larger flow resistance, so as to place it in between. As is shown in Fig.1, it is still also preferable, in view of keeping the flow resistance of the liquid fuel at an appropriate level, to house the fuel-reforming grains 2b, 3 of small diameters, and the fuel-reforming grains 2a of large diameters alternately into a plurality of housing compartments A to D disposed in regions ranging from the end walls 42, 43, respectively having the introduction port 52 and discharge port 53, towards the magnet unit 7. It is also allowable to house the ceramic grains 22, having no rare earth ceramic layer 21 formed thereon (see FIG. 11), in any of the housing compartments (housing compartments B and C, for example) in place of the first fuel-reforming grains 2, because a certain level of fuel-reforming effect can be expected even from the ceramic grains 22 alone, contributed by the rare earth ore contained therein.

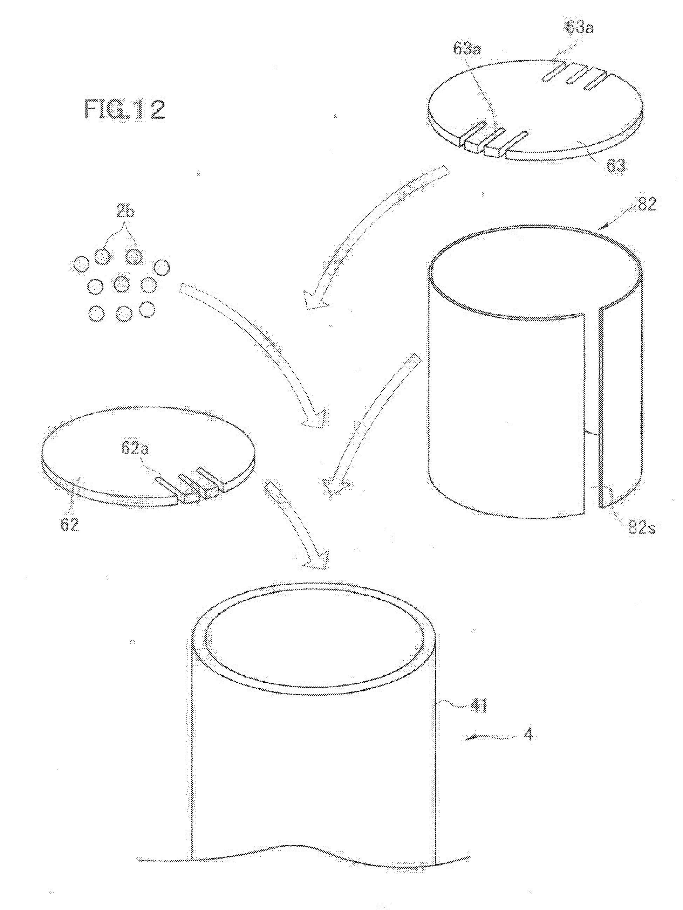

The fuel reformer 1 can be fabricated as follows. First, the cylinder component 41 and the end wall plate 42 are welded by argon arc welding, and according to the order of arrangement shown in FIG. 1, the first fuel-reforming grains 2 (2a, 2b), second fuel-reforming grains 3, diaphragms 61 to 64, spacers 81 to 83 and magnet unit 7 are placed therein from the opposite end portion of the cylinder component 41. FIG. 12 shows an exemplary case of forming the housing compartment C on the introduction port 52 side. The cylinder component 41, before formation of the housing compartment C, has the first fuel-reforming grains 2a of large diameters and the spacer 82, both composing the housing compartment B, exposed to the topmost therein (not shown). Under this state, the diaphragm 62 on the introduction port 52 side, spacer 82, first fuel-reforming grains 2b of small diameters, and diaphragm 63 on the discharge port 53 side are inserted in this order into the cylinder component 41. Other housing compartments A to E can similarly be fabricated.

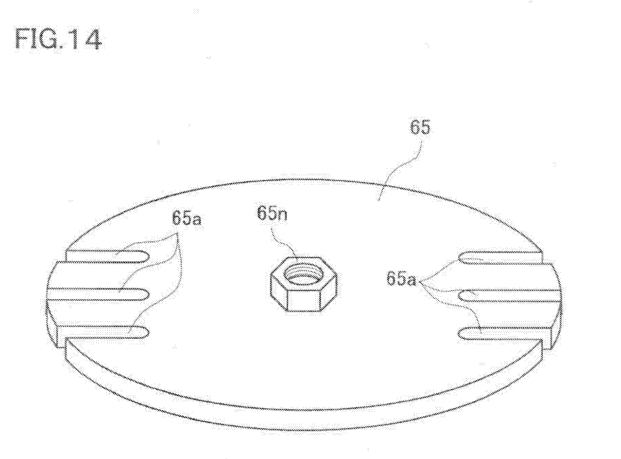

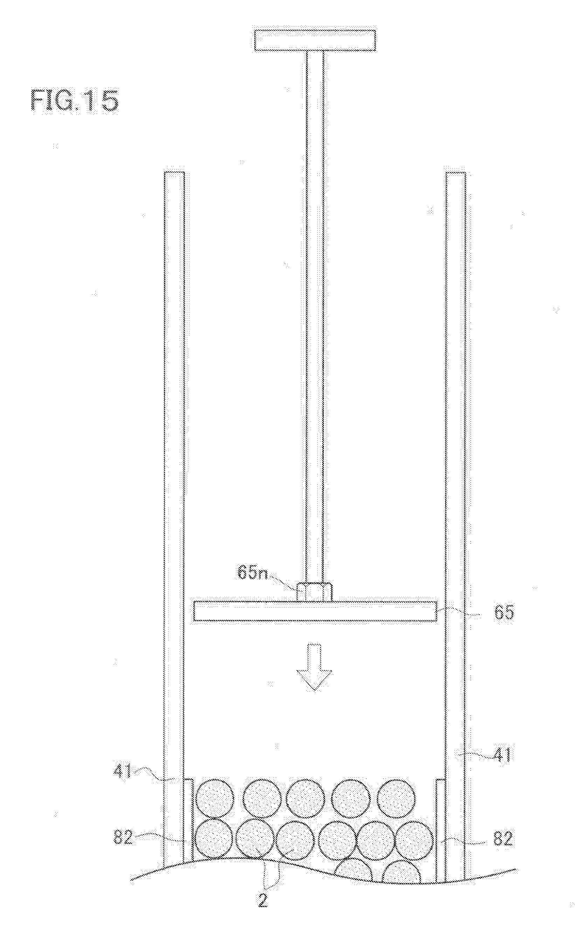

Insertion of the diaphragms 61 to 64 into the cylinder component 41 may sometimes result in inclined setting thereof in the cylinder component 41, so that it is allowable to use a diaphragm 65, as shown in FIG. 14, having a nut-formed engagement portion 65n on one main surface thereof. With this structure, as is shown in Fig.15, it is made possible to correctly insert the diaphragm 65 into the cylinder component 41, by using an insertion rod 65b having a bolt-formed end capable of engaging with the engagement portion 65n. After insertion of the diaphragm 65, the insertion rod 65b can be detached from the engagement portion 65n, and only the insertion rod 65b is drawn out last.

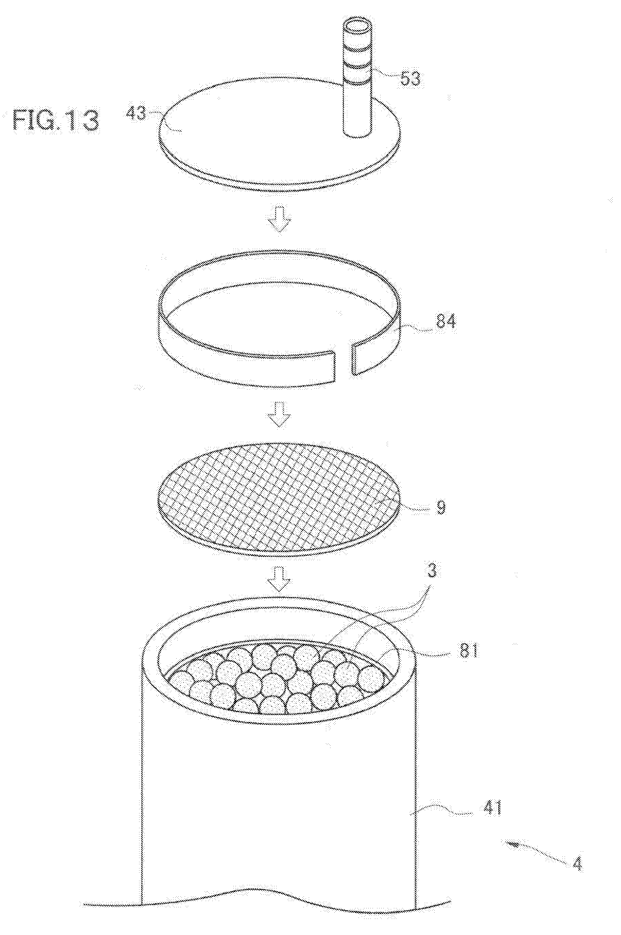

For the purpose of preventing the second fuel-reforming grains 3 from clogging in the discharge port 53 in the housing compartment "A" on the discharge port 53 side, there is provided a mesh component (a net made of metal, for example) 9, having a mesh size smaller than the second fuel-reforming grains 3, as being disposed between the end wall plate 43 having the discharge port 53, and the second fuel-reforming grains 3 (FIG. 3). Further between the mesh component 9 and end wall plate 43, a spacer 84 is disposed (FIG. 3). The spacer 84 has the same geometry with other spacers 81 to 83, except that it has a shorter length in the direction of axial line. This configuration can be obtained by inserting, in the final stage of the insertion into the cylinder component 41 as shown in FIG. 13, the mesh component 9 and spacer 84 in this order, on the second fuel-reforming grains 3 and spacer 81 composing the housing compartment "A", finally placing the end wall plate 43, and combining the cylinder component 41 and end wall plate 43. The fuel reformer 1 is thus completed by argon arc welding.

The embodiments of the present invention have been descried in the above, wherein the present invention is by no means limited thereto, and can be embodied in any appropriately modified forms without departing from the spirit of the invention.

The next paragraphs will describe the tests conducted for confirming the effects of the fuel reformer of the present invention.

The National Motor Vehicle NOx and PM Emissions Act having been in force since 2002 denotes that any vehicles not meeting the predetermined regulatory standards for emission gas control will not be granted continued inspection certification in regulated areas after the grace periods have expired. Of all vehicles, absolutely no diesel vehicles seem to clear the strict emission gas control standards, only to wait for expiration of the grace periods.

The present inventors then attached the fuel reformer according to the embodiment of the present invention to four diesel vehicles (three 10-t vehicles and one 7-t vehicle), of which grace periods will soon expire or have already expired, and submitted the vehicles to Japan Vehicle Inspection Association (inspection agency licensed by Ministry of Land Infrastructure and Transport, Japan) for the diesel vehicle emission gas test (6-mode). The test was conducted by allowing the vehicles to drive on rollers directly coupled with a chassis dynamometer, under the same load with road driving, and by measuring amount of emission gas from the vehicles. Targets of the measurement include CO, HC and NOx. Mean emission concentration filled in test sheets (6-mode) for diesel vehicle emission gas test are shown together with the regulatory values (the National Motor Vehicle NOx and PM Emissions Act values) in Tables 1 to 4.

**[Table 1]**

| • 10-t Vehicle (1) | | |
|---|---|---|
| Substance to be inspected | Regulatory value (ppm) | Mean emission concentration (ppm) |
| Carbon monoxide (CO) | 980 | 897.96 |
| Hydrocarbon (HC) | 670 | 196.32 |
| Nitrogen oxide (NOx) | 520 | 372.19 |

**[Table 2]**

| • 10-t Vehicle (2) | | |
|---|---|---|
| Substance to be inspected | Regulatory value (ppm) | Mean emission concentration (ppm) |
| Carbon monoxide (CO) | 980 | 178.19 |
| Hydrocarbon (HC) | 670 | 196.66 |
| Nitrogen oxide (NOx) | 520 | 400.82 |

**[Table 3]**

| • 10-t vehicle (3) | | |
|---|---|---|
| Substance to be inspected | Regulatory value (ppm) | Mean emission concentration (ppm) |
| Carbon monoxide (CO) | 980 | 455.94 |
| Hydrocarbon (HC) | 670 | 183.64 |
| Nitrogen oxide (NOx) | 520 | 432.37 |

**[Table 4]**

| • 7-t Vehicle | | |
|---|---|---|
| Substance to be inspected | Regulatory value (ppm) | Mean emission concentration (ppm) |
| Carbon monoxide (CO) | 790 | 527 |
| Hydrocarbon (HC) | 510 | 230 |
| Nitrogen oxide (NOx) | 520 | 403 |

As shown in Tables 1 to 4, all diesel vehicles attached with the fuel reformer of the present invention showed the mean emission concentrations of the individual components lower than the regulatory values (the National Motor Vehicle NOx and PM Emissions Act values). Four these diesel vehicles were consequently granted as meeting the emission gas standards and accepted for the continued inspection certification. It is obvious from the findings in the above, that the fuel reformer of the present invention is effective in reforming diesel oil to thereby reduce the amounts of emission of CO, HC and NOx.

## Claims

1. A fuel reformer reforming a petroleum-derived liquid fuel, comprising:
a cylindrical container allowing the liquid fuel to flow therethrough; and
first fuel-reforming grains housed in the cylindrical container, having on the surficial layer thereof a rare earth ceramic layer containing either one of, or both of Ti and Ag, together with a rare earth ore.

2. The fuel reformer as claimed in Claim 1, wherein the rare earth ceramic layer is compromised of a deposited mixture of rare earth one powder with both of Ti powder and Ag powder, or with either one of the two.

3. The fuel reformer as claimed in Claim 1 or 2, wherein the rare earth ceramic layer is formed on the inner wall surface of the cylindrical container.

4. The fuel reformer as claimed in any one of Claims 1 to 3, wherein the first fuel-reforming grains comprise ceramic grains obtained by molding and sintering a mixture containing rare earth ore powder and a binder, and the rare earth ceramic layer formed on the surface of the ceramic grain.

5. The fuel reformer as claimed in any one of Claims 1 to 4, further comprising a magnet housed in the cylindrical container.

6. The fuel reformer as claimed in Claim 5, further comprising a magnet unit which comprises:
a perforated diaphragm having through-holes for the liquid fuel formed therein, partitioning the inner space of the cylindrical container into upstream one and downstream one in the direction of flow; and
the magnet supported on the perforated diaphragm.

7. The fuel reformer as claimed in Claim 6, wherein the magnet unit comprises a pair of the perforated diaphragms, and the magnet held therebetween.

8. The fuel reformer as claimed in Claim 6 and 7, comprising a plurality of the magnet units.

9. The fuel reformer as claimed in any one of Claims 6 to 8, wherein a space between a pair of the magnet units serves as a housing compartment for the fuel-reforming grains.

10. The fuel reformer as claimed in any one of Claims 1 to 9, further comprising second fuel-reforming grains containing either one of, or both of quartz and garnet, as being housed in the cylindrical container together with the first fuel-reforming grains.

11. The fuel reformer as claimed in Claim 10, wherein the second fuel-reforming grains are obtained by molding and sintering a mixture containing either one of, or both of quartz powder and garnet powder, and a binder.

12. The fuel reformer as claimed in Claim 10 or 11, wherein the second fuel-reforming grains further comprise tourmaline.

13. The fuel reformer as claimed in any one of Claims 1 to 12, further comprising a perforated diaphragm having through-holes for the liquid fuel formed therein,
the perforated diaphragm partitioning the inner space of the cylindrical container into upstream one and downstream one in the direction of flow,
each partitioned space serving as a housing compartment for the fuel-reforming grains, and
the housing compartments being lying in a row in the direction of flow.

14. The fuel reformer as claimed in Claim 13, wherein the through-hole formed in the perforated diaphragm is arranged at a position off-aligned with a position corresponded to the through-hole formed in the adjacent perforated diaphragm.

15. The fuel reformer as claimed in Claim 13 or 14, wherein the through-hole formed in the perforated diaphragm is arranged at a position off-aligned with a position corresponded to the through-hole formed in the adjacent perforated diaphragm, so as to generate an irregular flow of the liquid fuel.

16. The fuel reformer as claimed in any one of Claims 13 to 15, wherein the through-holes respectively formed in the perforated diaphragms disposed in a row in the direction of flow are arranged so as to fall on a helical locus centered round the axial line of the direction of flow.

17. The fuel reformer as claimed in any one of Claims 13 to 16, wherein the rare earth ceramic layer is formed on the inner wall surface of the cylindrical container and on the surface of the perforated diaphragm.

18. The fuel reformer as claimed in any one of Claims 13 to 17, wherein the rare earth ceramic layer is formed on the inner wall surface of the cylindrical container and on the surface of components involved in the cylindrical container.

19. The fuel reformer as claimed in any one of Claims 13 to 18, wherein the fuel-reforming grains comprise those having a first size and those having a second size larger than the first-size, and are housed by size in the housing compartments.

20. The fuel reformer as claimed in Claim 19, wherein the housing compartments having the fuel-reforming grains of the second size housed therein are disposed on the upstream and downstream sides, in the direction of flow, of the housing compartment having the fuel-reforming grains of the first size housed therein.

21. The fuel reformer as claimed in Claim 19 or 20, comprising:
a perforated diaphragm having through-holes for the liquid fuel formed therein, and partitioning the inner space of the cylindrical container into upstream one and downstream one in the direction of flow; and
the magnet supported by the perforated diaphragm,
wherein the cylindrical container has, at the upstream and downstream end portions thereof, end walls having either of an introduction port and a discharge port, and
a plurality of the housing compartments, provided between the end wall having the introduction port or the discharge port and the magnet unit, have the fuel-reforming grains of the first size and of the second size alternately housed therein.

22. The fuel reformer as claimed in any one of Claims 13 to 21, wherein the cylindrical container has, at the upstream and downstream end portions thereof, end walls having either of an introduction port and a discharge port, and
the housing compartment involving the end wall having the introduction port has, as being housed therein, the second fuel-reforming grains comprising either one of, or both of quartz and garnet, together with tourmaline.

23. The fuel reformer as claimed in any one of Claims 13 to 22, wherein the cylindrical container has, at the upstream and downstream end portions thereof, end walls having either of an introduction port and a discharge port, and
the housing compartment involving the end wall having the discharge port has, as being housed therein, the second fuel-reforming grains comprising either one of, or both of quartz and garnet, together with tourmaline.

24. The fuel reformer as claimed in any one of Claims 1 to 23, wherein the cylindrical container has, at the upstream and downstream end portions thereof, end walls having either of an introduction port and a discharge port, and
having a mesh component, having a mesh size smaller than the fuel-reforming grains, disposed between the end wall having the discharge port and the fuel-reforming grains.

25. A fuel reformer comprising a cylindrical container having therein perforated diaphragms partitioning the inner space thereof back and forth at a plurality of sites along the axial direction thereof; the perforated diaphragm having through-holes; each of the sections of the inner space of the cylindrical container partitioned by the perforated diaphragms being provided as a housing compartment; some of the housing compartments having first fuel-reforming grains containing a rare earth ore, housed therein by grain sizes; further comprising a magnet unit having a magnet supported on the perforated diaphragm in the cylindrical container; being configured so as to reform a petroleum-base liquid fuel flowing through the cylindrical container, wherein
each of the first fuel-reforming grains comprises a ceramic grain obtained by molding and sintering a mixture containing a rare earth ore powder and a binder, and a rare earth ceramic layer formed on the surface of the ceramic grain, obtained by fusing a mixed powder of a rare earth ore powder and either one of, or both of Ti powder and Ag powder.

26. A fuel reformer comprising a cylindrical container having therein perforated diaphragms partitioning the inner space thereof back and forth at a plurality of sites along the axial direction thereof; the perforated diaphragm having through-holes; each of the sections of the inner space of the cylindrical container partitioned by the perforated diaphragms being provided as a housing compartment; some of the housing compartments having first fuel-reforming grains containing a rare earth ore, housed therein by grain sizes; further comprising a magnet unit having a magnet supported on the perforated diaphragm in the cylindrical container; being configured so as to reform a petroleum-base liquid fuel flowing through the cylindrical container, wherein
each of the first fuel-reforming grains comprises a ceramic grain obtained by molding and sintering a mixture containing a rare earth ore powder and a binder, and a rare earth ceramic layer formed on the surface of the ceramic grain, obtained by fusing a mixed powder of a rare earth ore powder and either one of, or both of Ti powder and Ag powder, and
the rare earth ceramic layer, obtained by fusing a mixed powder of a rare earth ore powder and either one of, or both of Ti powder and Ag powder, is formed also on the inner wall surface of the cylindrical container and on the surface of the perforated diaphragm, and on the surface of components involved in the cylindrical container.

27. A fuel reformer comprising a cylindrical container having therein perforated diaphragms partitioning the inner space thereof back and forth at a plurality of sites along the axial direction thereof; the perforated diaphragm having through-holes; each of the sections of the inner space of the cylindrical container partitioned by the perforated diaphragms being provided as a housing compartment; some of the housing compartments having first fuel-reforming grains containing a rare earth ore, housed therein by grain sizes; further comprising a magnet unit having a magnet supported on the perforated diaphragm in the cylindrical container; being configured so as to reform a petroleum-base liquid fuel flowing through the cylindrical container, wherein
each of the first fuel-reforming grains comprises a ceramic grain obtained by molding and sintering a mixture containing a rare earth ore powder and a binder, and a rare earth ceramic layer formed on the surface of the ceramic grain, obtained by fusing a mixed powder of a rare earth ore powder and either one of, or both of Ti powder and Ag powder, and
second fuel-reforming grains, containing either one of, or both of quartz and garnet, are housed in the housing compartment located more closer to the in-coming side of the liquid fuel than the housing compartment housing the first fuel-reforming grains having the rare earth ceramic layer formed on the surface thereof.
